# EUROPEAN PATENT APPLICATION

(11) **EP 4 759 531 A1**
(43) Date of publication of application: **17.06.2026**
(21) Application number: 24886383.9
(22) Date of filing: 01.11.2024
(51) Int. Cl.: B30B 3/04, B30B 11/20, B30B 15/04, H01M 4/04

(54) **ELECTRODE MANUFACTURING APPARATUS AND SETTING METHOD THEREFOR**

(30) Priority: 01.11.2023 KR 20230149083; 01.01.2024 KR 20240153688
(71) Applicant: LG Energy Solution, Ltd., Seoul 07335 (KR)
(72) Inventor: LIM, Dong Hun, Daejeon 34122 (KR); HWANG, Koo Youn, Daejeon 34122 (KR); CHO, Won Hak, Daejeon 34122 (KR); CHA, Myeong Geun, Daejeon 34122 (KR); JEONG, Yun Hyeock, Daejeon 34122 (KR)
(74) Representative: Goddar, Heinz J.
(86) International application number: PCT/KR2024/017102
(87) International publication number: WO 2025/095713

(57) **Abstract**

An electrode manufacturing apparatus according to an embodiment of the present disclosure includes a pair of rolls arranged side by side with a gap between the pair of rolls; a first bearing rotatably supporting the roll; a second bearing facing the first bearing in an axial direction of the roll and rotatably supporting the roll; and a gap adjustment unit configured to adjust at least one of a gap between the two first bearings supporting the pair of rolls, or a gap between the two second bearings supporting the pair of rolls.

## Description

### TECHNICAL FIELD

### CROSS-REFERENCE TO RELATED APPLICATIONS

The present application claims priority to Korean Patent Application No. 10-2023-0149083 filed on November 1, 2023 and Korean Patent Application No. 10-2024-0153688 filed on November 1, 2024 in the Republic of Korea, the disclosures of which are incorporated herein by reference.

### TECHNICAL FIELD

The present disclosure relates to an electrode manufacturing apparatus and a setting method for setting the electrode manufacturing apparatus, and more particularly, to an electrode manufacturing apparatus that can solve a problem with an increase in gap between a pair of rolls in a rolling process of an electrode film and its setting method.

### BACKGROUND ART

A secondary battery is generally manufactured by receiving an electrode assembly including a stack of a positive electrode (or a cathode), a separator and a negative electrode (or an anode) in a case such as a cylindrical can or a prismatic pouch.

Each of the positive electrode and the negative electrode is manufactured by applying an electrode slurry to two surfaces (or one surface) of an electrode foil as a current collector. There are various methods for preparing the electrode slurry and adhering it to the electrode foil, and a method including forming the electrode slurry into a thin film shape, stacking and binding has been known.

In this instance, the electrode film and the electrode foil are rolled after adhering or simultaneously while being adhered to manufacture the electrode, followed by the subsequent processes of forming an electrode tab in an uncoated portion where the electrode foil is not covered with the electrode film and is exposed outside.

Meanwhile, the method for manufacturing the electrode film uses a powder sheeting process of forming a powder-state mixture including an active material, a carbon material and a binder as the main components into a sheet, as is well known. The powder sheeting process is performed by feeding the powder-state mixture between sheeting rolls. The pressure and shear force are applied to the mixture fed between the sheeting rolls by a rotational speed difference between the sheeting rolls to form the sheet-type electrode film.

Additionally, the powder sheeting process is followed by a calendering process of reducing the thickness of the electrode film to a target thickness. In the calendering process, the thickness of the electrode film is reduced while the electrode film is continuously passed between adjacent calendering rolls. In this instance, the process is performed by adjusting a gap between the adjacent calendering rolls, a ratio of the rotational speed difference (tip speed ratio) and the temperature of the calendering rolls.

Meanwhile, in a manufacturing apparatus including the sheeting rolls and the calendering rolls whereby the object is rolled while the object is passed between the adjacent rolls, the initially set gap between the adjacent rolls gradually increases during the rolling of the electrode film.

This occurs due to a gap between a 'roll' and 'a hole of a bearing coupled to the roll'. Hereinafter, it will be described in more detail.

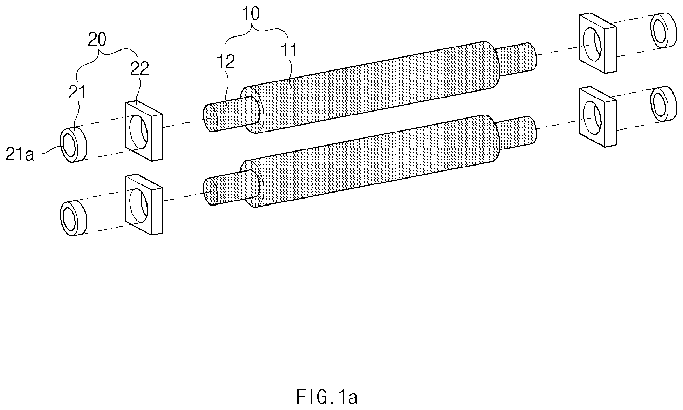

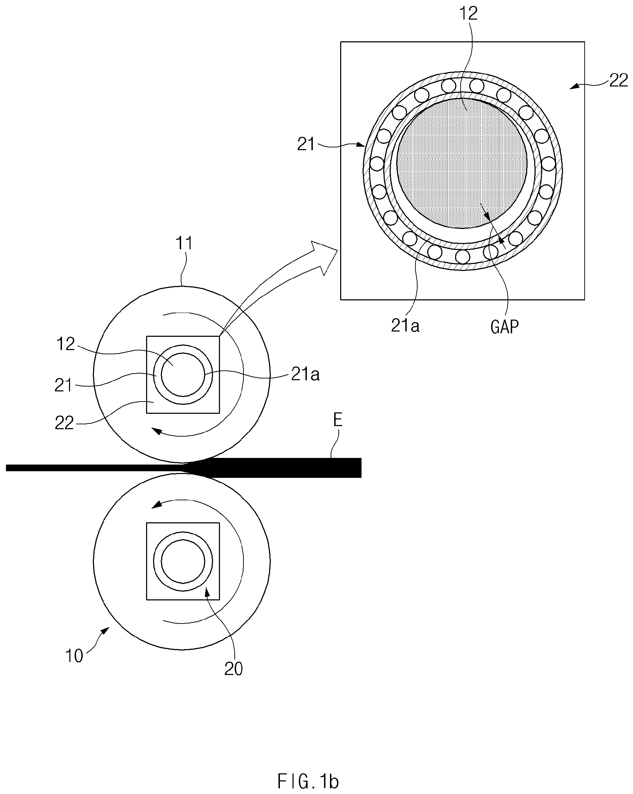

FIG. 1a is a schematic exploded view of the conventional electrode manufacturing apparatus, and FIG. 1b is a schematic diagram showing that the pair of rolls shown in FIG. 1a are rolling the electrode film E.

The electrode manufacturing apparatus may include the pair of rolls 10. Referring to FIG. 1a, each roll 10 may include a cylindrical barrel 11, and a neck 12 extended from two ends of the barrel 11 and having a smaller diameter than the barrel 11.

The pair of rolls 10 may be arranged side by side with a gap between them. More specifically, the gap may refer to a gap between the barrels 11 of the pair of rolls 10.

Additionally, a bearing 20 may be coupled to each roll 10. The bearing 20 may be configured to fix each roll 10 while supporting the load of the roll 10 and allow the roll 10 to rotate.

Referring to FIG. 1b, the bearing 20 may include a bearing body 21 having an insertion hole 21a into which the neck 12 of the roll 10 is inserted, and a bearing housing 22 on which the bearing body 21 is mounted. Generally, the bearing body 21 may include an inner diameter defining the insertion hole 21a, an outer diameter mounted on the bearing housing 22, and a plurality of rolling members (for example, balls) between the inner diameter and the outer diameter.

For smooth coupling between the neck 12 and the bearing 20, it is general that the inner diameter of the insertion hole 21a of the bearing 20 is larger than the outer diameter of the neck 12.

However, as shown in FIG. 1b, a gap is created between the insertion hole 21a of the bearing 20 and the neck 12 of each roll 10, and thus it may be difficult to constantly maintain the size of the gap between the pair of rolls 10. Accordingly, the amount of rolling of the object, i.e., the electrode film E is not constant, causing defects in thickness, density and porosity of the electrode film E.

### SUMMARY

### TECHNICAL PROBLEM

The present disclosure is directed to providing an electrode manufacturing apparatus capable of preventing an unintentional increase in gap between a pair of rolls and its setting method.

### TECHNICAL SOLUTION

An electrode manufacturing apparatus according to an embodiment of the present disclosure may include a pair of rolls arranged side by side with a gap between the pair of rolls; a first bearing rotatably supporting the roll; a second bearing facing the first bearing in an axial direction of the roll and rotatably supporting the roll; and a gap adjustment unit configured to adjust at least one of a gap between the two first bearings supporting the pair of rolls, or a gap between the two second bearings supporting the pair of rolls.

The roll may include a cylindrical barrel extended in the axial direction; and a neck extended from two end portions of the barrel and having a smaller diameter than a diameter of the barrel. Each of the first bearing and the second bearing may include a bearing body having an insertion hole into which the neck is inserted; and a bearing housing on which the bearing body is mounted.

An inner diameter of the insertion hole of the bearing body may be larger than an outer diameter of the neck.

The gap adjustment unit may include a first gap adjustment unit to adjust the gap between the two first bearings; and a second gap adjustment unit to adjust the gap between the two second bearings.

The first gap adjustment unit may apply a force in a direction of reducing the gap between the two first bearings, and the second gap adjustment unit may apply the force in a direction of increasing the gap between the two second bearings.

The first gap adjustment unit may include a piston to apply pressure to at least one of the two first bearings to reduce the gap between the two first bearings.

One of the two first bearings may be fixed, and the piston may apply the pressure to the other first bearing toward said one first bearing.

The second gap adjustment unit may include a position adjustment bar that moves in between the two second bearings to increase the gap between the two second bearings.

At least one of facing sides of the two second bearings may have a slope surface, and the position adjustment bar may have a slope sliding surface disposed in contact with the slope surface.

The slope surface may be formed in a direction in which a distance between the facing sides of the two second bearings decreases downwards.

The second gap adjustment unit may further include a stopper to keep the position adjustment bar from completely slipping out from between the two second bearings.

The pair of rolls may have a same size, and the insertion hole of the bearing body of each of the first bearing and the second bearing may have a same inner diameter.

A method for setting an electrode manufacturing apparatus according to an embodiment of the present disclosure may include the steps of: placing a pair of rolls side by side; reducing a gap between two first bearings rotatably supporting the pair of rolls to cause the pair of rolls to get closer to each other; and increasing a gap between two second bearings facing the two first bearings in an axial direction of the rolls to constrain a motion of the pair of rolls.

In the step of causing the pair of rolls to get closer to each other, the two first bearings may move until they contact each other.

The two first bearings may be fixed in contact with each other, and the step of constraining the motion of the pair of rolls may be performed in the fixed state of the two first bearings.

In the step of constraining the motion of the pair of rolls, the two second bearings may move to a location impossible to move any longer.

### ADVANTAGEOUS EFFECTS

According to an exemplary embodiment of the present disclosure, despite the gap between each bearing and the roll, it may be possible to precisely set the gap between the pair of rolls. Accordingly, it may be possible to roll the electrode film fed between the pair of rolls with high and constant quality.

In addition to the aforementioned effects, the present disclosure may have various technical effects from the configuration described in the present disclosure.

### BRIEF DESCRIPTION OF THE DRAWINGS

FIG. 1a is a schematic exploded view of a conventional electrode manufacturing apparatus.
FIG. 1b is a schematic diagram showing that a pair of rolls shown in FIG. 1a are rolling an electrode film E.
FIG. 2 is a partial enlarged view of an electrode manufacturing apparatus according to an embodiment of the present disclosure.
FIG. 3 is a diagram in which a first bearing shown in FIG. 2 is removed.
FIG. 4 is a diagram showing a second bearing shown in FIG. 3 and its neighborhood when viewed from the front.
FIG. 5 is a diagram showing a first bearing shown in FIG. 2 and its neighborhood when viewed from the front.
FIG. 6a is a diagram showing a first bearing and a neck of a roll in contact with each other.
FIG. 6b is a diagram showing a second bearing and a neck of a roll in contact with each other.
FIG. 7 is a cross-sectional view showing that movement of the neck of the roll is constrained by the contact with each of the first bearing and the second bearing.

### DETAILED DESCRIPTION

Hereinafter, the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited to the disclosed embodiments.

To clearly describe the present disclosure, an irrelevant description is omitted, and the identical reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

The present disclosure relates to an electrode manufacturing apparatus that can solve the problems with an increasing gap between rolls due to a gap between a bearing and a roll and its setting method, and the embodiments of the present disclosure will be described in more detail with reference to the accompanying drawings.

The present disclosure provides an electrode manufacturing apparatus as a first embodiment.

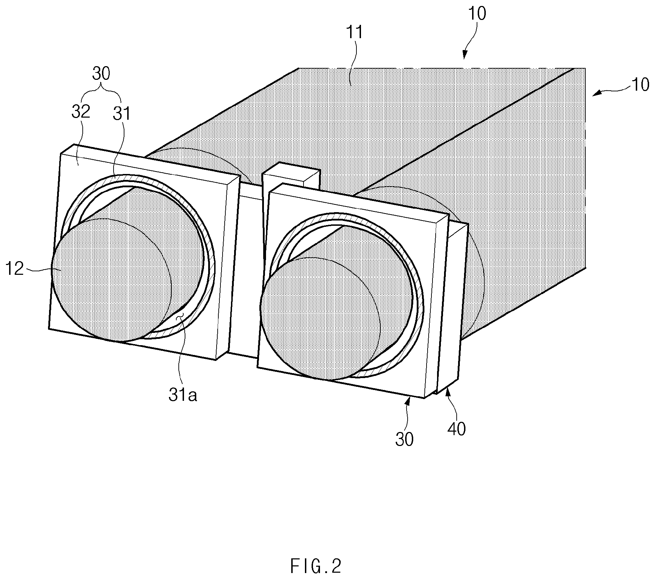

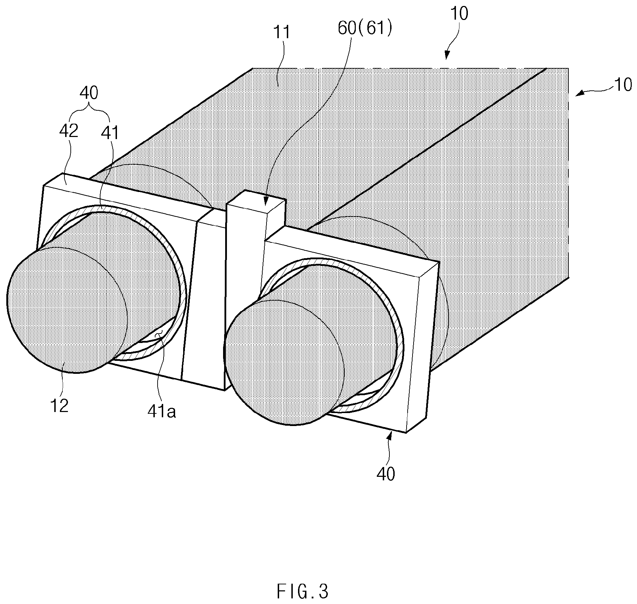

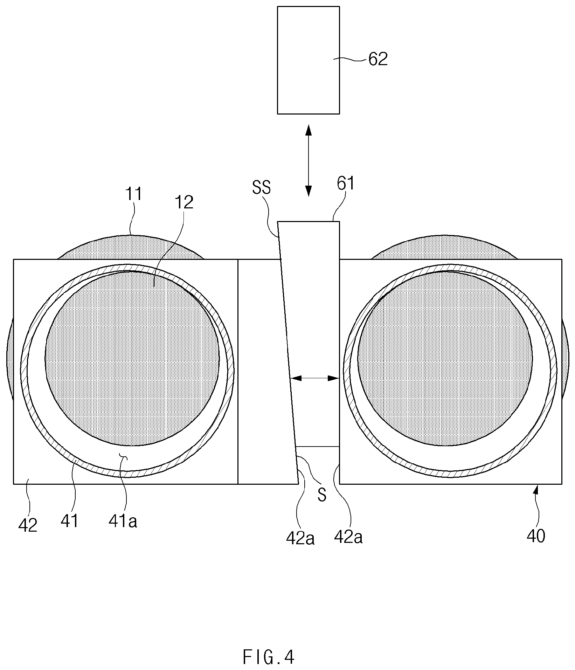

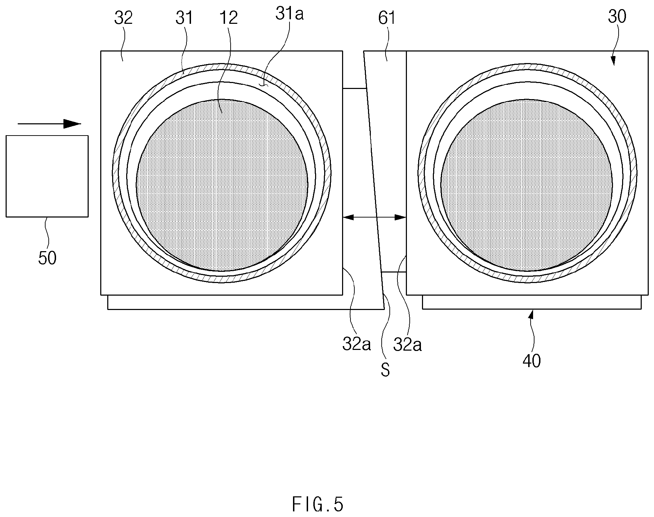

FIG. 2 is a partial enlarged view of the electrode manufacturing apparatus according to an embodiment of the present disclosure, FIG. 3 is a diagram in which a first bearing shown in FIG. 2 is removed, FIG. 4 is a diagram showing a second bearing shown in FIG. 3 and its neighborhood when viewed from the front, and FIG. 5 is a diagram showing the first bearing shown in FIG. 2 and its neighborhood when viewed from the front.

The electrode manufacturing apparatus according to an embodiment of the present disclosure may include a pair of rolls 10, the first bearing 30, the second bearing 40 and gap adjustment units 50, 60.

The pair of rolls 10 may be arranged side by side with a predetermined gap between them. Each roll 10 may include a cylindrical barrel 11 extended in the axial direction, and a neck 12 extended from two end portions of the barrel 11 and having a smaller diameter than the diameter of the barrel 11.

The first bearing 30 and the second bearing 40 may rotatably support the roll 10. The second bearing 40 may face the first bearing 30 in the axial direction of the roll 10. The following description is made, taking as an example, the second bearing 40 located at the inner position than the first bearing 30 in the axial direction of the roll 10 as shown in FIG. 2. That is, the first bearing 30 may be referred to as an outer bearing, and the second bearing 40 may be referred to as an inner bearing. In this case, the neck 12 of the roll 10 may be inserted into the second bearing 40 and the first bearing 30 in a sequential order. On the basis of the barrel 11, a distance to the first bearing 30 may be longer than a distance to the second bearing 40.

However, the present disclosure is not limited thereto, and the first bearing 30 and the second bearing 40 may be arranged in the opposite order.

The first bearing 30 and the second bearing 40 may be disposed at the two end portions of each roll 10. Although FIG. 2 shows only one end portion of each roll 10, those skilled in the art will understand the configuration of the opposite end portion as well.

Each bearing 30, 40 may include a bearing body 31, 41 having an insertion hole 31a, 41a into which the neck 12 of the roll 10 is inserted, and a bearing housing 32, 42 on which the bearing body 31, 41 is mounted. More specifically, the first bearing 30 may include the bearing body 31 having the insertion hole 31a, and the bearing housing 32 on which the bearing body 31 is mounted. Likewise, the second bearing 40 may include the bearing body 41 having the insertion hole 41a, and the bearing housing 42 on which the bearing body 41 is mounted.

Each bearing body 31, 41 may include an inner diameter defining the insertion hole 31a, 41a, an outer diameter mounted on the bearing housing 32, 42, and a plurality of rolling members (for example, balls) between the inner diameter and the outer diameter. The configuration and operation of the bearing bodies 31, 41 themselves are well known and its detailed description is omitted.

The gap adjustment units 50, 60 may be configured to adjust at least one of the gap between the two first bearings 30 supporting the pair of rolls 10, or the gap between the two second bearings 40 supporting the pair of rolls 10. More specifically, the gap adjustment units 50, 60 may adjust the gap between the first bearing 30 of one roll 10 and the first bearing 30 of the other roll 10, or the gap between the second bearing 40 of one roll 10 and the second bearing 40 of the other roll 10, or both.

Meanwhile, the inner diameter of the insertion hole 31a, 41a of each bearing body 31, 41 may be larger than the outer diameter of the neck 12. That is, a gap may be formed between the inner diameter of the insertion hole 31a, 41a and the outer diameter of the neck 12.

The neck 12 of each roll 10 may move as much as the gap between the first bearing 30 and the second bearing 40. Accordingly, the gap adjustment units 50, 60 may control the motion of the pair of rolls 10 by adjusting the gap between the two first bearings 30 and/or the gap between the two second bearings 40.

Referring to FIGS. 3 to 5, the gap adjustment units 50, 60 may include the first gap adjustment unit 50 to adjust the gap between the two first bearings 30, and the second gap adjustment unit 60 to adjust the gap between the two second bearings 40.

The first gap adjustment unit 50 may apply a force in a direction of reducing the gap between the two first bearings 30. The second gap adjustment unit 60 may apply a force in a direction of increasing the gap between the two second bearings 40. Accordingly, the gap between the pair of rolls may be precisely adjusted by the first gap adjustment unit 50 and the second gap adjustment unit 60.

The horizontal two-directional arrow indicated in FIG. 5 indicates the gap between the two first bearings 30. The gap between the two first bearings 30 may be a distance between facing sides 32a of the bearing housings 32.

As shown in FIG. 5, the first gap adjustment unit 50 may include a piston 50 to apply pressure to at least one of the two first bearings 30 to reduce the gap between the two first bearings 30. For convenience of description, the first gap adjustment unit 50 and the piston 50 are indicated by the same reference numeral '50'.

The piston 50 may apply pressure to the first bearing 30, to be more specific, the bearing housing 32 of the first bearing 30.

As an example, one first bearing 30 of the two first bearings 30 may be fixed, and the piston 50 may apply pressure to the other first bearing 30 toward one first bearing 30. As another example, the piston 50 may include a pair of pistons, and one piston 50 may apply pressure to one first bearing 30 toward the other first bearing 30, and the other piston may apply pressure to the other first bearing 30 toward one first bearing 30.

However, the first gap adjustment unit 50 is not limited thereto, and may reduce the gap between the two first bearings 30 using any other component instead of the piston 50.

The horizontal two-directional arrow indicated in FIG. 4 indicates the gap between the two second bearings 40. The gap between the two second bearings 40 may be a distance between facing sides 42a of the bearing housings 42.

As shown in FIG. 4, the second gap adjustment unit 60 may include a position adjustment bar 61 that moves in between the two second bearings 40 to increase the gap between the two second bearings 40. The position adjustment bar 61 may be configured to do a linear motion (for example, move in a vertical direction).

At least one of the facing sides 42a of the two second bearings 40 may have a slope surface S, and the position adjustment bar 61 may have a slope sliding surface SS disposed in contact with the slope surface S.

More specifically, the slope surface S may be formed in only one of the facing sides 42a of the two second bearings 40 or both the two facing sides 42a. Here, the slope sliding surface SS of the position adjustment bar 13 may be formed corresponding to the location and number of the slope surface S. Here, corresponding represents that the slope sliding surface SS and the slope surface S may slide each other while keeping the surface contact.

For example, the slope surface S may be formed in a direction in which the distance between the facing sides 42a of the two second bearings 40 decreases as it goes downwards. That is, by the slope surface S, the gap between the two second bearings 40 may be reduced as it goes downwards.

In this case, the position adjustment bar 61 may move down and into between the two second bearings 40. Additionally, the position adjustment bar 61 may have such a shape that its width decreases as it goes downwards.

Accordingly, as the position adjustment bar 61 moves down, the gap between the two second bearings 40 may increase. Additionally, when the gap between the two second bearings 40 is reduced by an external force, the position adjustment bar 61 may move up.

The second gap adjustment unit 60 may further include a stopper 62 to keep the position adjustment bar 61 from completely slipping out from between the two second bearings 40. As described above, when the gap between the two second bearings 40 is reduced by an external force, the position adjustment bar 61 may move up. In this instance, the stopper 62 may limit the height to which the position adjustment bar 61 moves.

Accordingly, it may be possible to ensure a predetermined level of minimum gap between the two second bearings 40. In other words, the position adjustment bar 61 is not completely slipped out by virtue of the stopper 62, thereby preventing the contact between the two second bearings 40.

Meanwhile, the pair of rolls 10 may have the same size. That is, the necks 12 of the pair of rolls 10 may have the same outer diameter. Additionally, the insertion holes 31a, 41a of the first bearing 30 and the second bearing 40, respectively, may have the same inner diameter. Accordingly, it is easy to design and manufacture the electrode manufacturing apparatus, and it is possible to minimize the parameters to consider when adjusting the gap between the pair of rolls 10.

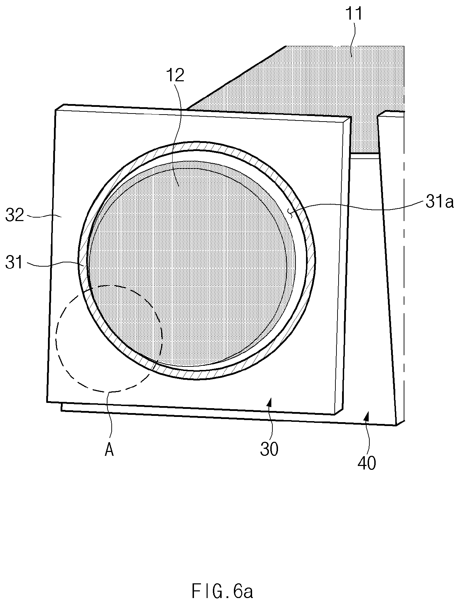

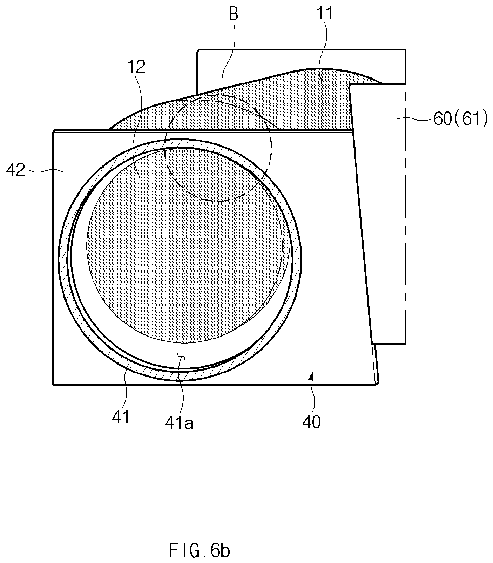

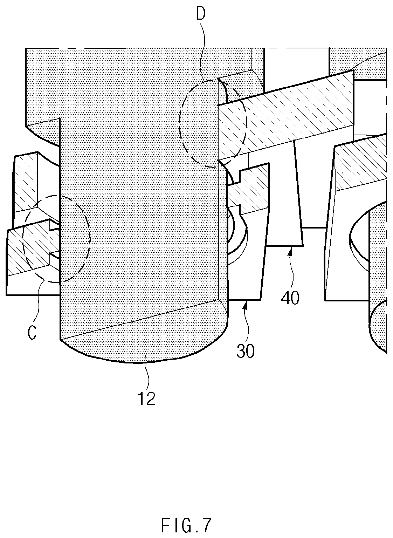

FIG. 6a is a diagram showing the first bearing and the neck of the roll in contact with each other, FIG. 6b is a diagram showing the second bearing and the neck of the roll in contact with each other, and FIG. 7 is a cross-sectional view showing that movement of the neck of the roll is constrained by the contact with each of the first bearing and the second bearing.

The present disclosure provides a method for setting the electrode manufacturing apparatus as a second embodiment. Accordingly, the above description may be properly incorporated in this embodiment.

The method for setting the electrode manufacturing apparatus according to this embodiment may include the steps of placing the pair of rolls 10 side by side (hereinafter 'placing step'), reducing the gap between the two first bearings 30 rotatably supporting the pair of rolls 10 to cause the pair of rolls 10 to get closer to each other (hereinafter 'roll moving step'), and increasing the gap between the two second bearings 40 to constrain the motion of the pair of rolls 10 (hereinafter, 'roll fixing step').

In the placing step, the first bearing 30 and the second bearing 40 may be mounted on each roll 10. Additionally, the barrels 11 of the pair of rolls 10 may be arranged with the predetermined gap between them.

After the placing step, the roll moving step may be performed. In the roll moving step, referring to FIG. 5, the two first bearings 30 may be moved closer to each other by the first gap adjustment unit 50.

For example, the first gap adjustment unit 50 may include the piston 50 to apply pressure to at least one of the two first bearings 30 to reduce the gap between the two first bearings 30. In the roll moving step, any one of the two first bearings 30 may be fixed, and the piston 50 may apply pressure to the other one.

In the roll moving step, the two first bearings 30 may be moved until they contact each other. When the two first bearings 30 contact each other, the two first bearings 30 may be fixed in a state that they contact each other. The fixing may be done by a fixing device (not shown), or may be kept fixed by the force that the first gap adjustment unit 50 continuously applies to the first bearing 30.

In the roll fixing step, referring to FIG. 4, the two second bearings 40 may be moved in a direction facing away from each other by the second gap adjustment unit 60. The roll fixing step may be performed in the fixed state of the two first bearings 30. However, the present disclosure is not limited thereto, and the roll moving step and the roll fixing step may be performed at the same time.

For example, the second gap adjustment unit 60 may include the position adjustment bar 61 that moves in between the two second bearings 40 to increase the gap between the two second bearings 40. In the roll fixing step, the position adjustment bar 61 may go down to move the two second bearings 40 apart from each other.

In the roll fixing step, the two second bearings 40 may move to a location impossible to move any longer. Here, the 'location impossible to move any longer' may be a location at which the neck 12 connected to the second bearing 40 cannot move any longer by the two first bearings 30 fixed in contact with each other.

Accordingly, the motion of the pair of rolls 10 may be constrained, thereby preventing the gap between the pair of rolls 10 from being changed.

Referring to FIG. 6a, in the roll moving step, a point of contact A between the outer circumference of the neck 12 of the roll 10 and the inner circumference of the insertion hole 31a of the first bearing 30 may move outward while the two first bearings 30 get closer to each other. That is, on the basis of FIG. 6a, the point of contact A may move to the leftmost in the inner circumference of the insertion hole 31a.

To stop the point of contact A from being changed any longer, the two first bearings 30 may be kept fixed.

Referring to FIG. 6b, in the roll fixing step, a point of contact B between the outer circumference of the neck 12 of the roll 10 and the inner circumference of the insertion hole 41a of the second bearing 40 may move inward while the two second bearings 40 move apart from each other. That is, on the basis of FIG. 6b, the point of contact B may move to the rightmost in the inner circumference of the insertion hole 41a.

To stop the point of contact B from being changed any longer, the two second bearings 40 may move to the location impossible to move any longer.

As described above, the second gap adjustment unit 60 may further include the stopper 62 to keep the position adjustment bar 61 from completely slipping out from between the two second bearings 40. By the stopper 62, the height to which the position adjustment bar 61 moves may be limited. In particular, as the position adjustment bar 61 is subjected to the upward pressure by an external force, the position adjustment bar 61 may be kept in contact with the stopper 62. Here, the external force may be a force that acts to cause the two second bearings 40 to get closer to each other by the neck 12 of the roll 10.

Because the position adjustment bar 61 does not completely slip out from between the two second bearings 40, the two second bearings 40 may be fixed while maintaining their gap. Additionally, as described above, the two first bearings 30 may be fixed in contact with each other.

When the two first bearings 30 and the two second bearings 40 are all fixed, as shown in FIG. 7, the neck 12 of each roll 10 may be immobilized by the contact with a point of contact C of the first bearing 30 in the direction in which the pair of rolls 10 go apart from each other, and may be immobilized by the contact with a point of contact D of the second bearing 40 in the direction in which the pair of rolls 10 get closer to each other.

Accordingly, despite the gap between each bearing 30, 40 and the neck 12 of the roll 10, it may be possible to precisely set the gap between the pair of rolls 10. Accordingly, the electrode film fed between the pair of rolls 10 may be rolled with high and constant quality.

Although the present disclosure has been hereinabove described with regard to a limited number of embodiments and drawings, the present disclosure is not limited thereto, and may be embodied in different forms by persons having ordinary skill in the technical field pertaining to the present disclosure within the technical aspect of the present disclosure and the appended claims and their equivalent scope.

### [List of Reference Numerals]

| | | | |
|---|---|---|---|
| 10: | Roll | 11: | Barrel |
| 12: | Neck | 30: | First bearing |
| 31: | Bearing body (of first bearing) | 31a: | Insertion hole (of first bearing) |
| 32: | Bearing housing (of first bearing) | 40: | Second bearing |
| 41: | Bearing body (of second bearing) | 41a: | Insertion hole (of second bearing) |
| 42: | Bearing housing (of second bearing) | 50: | First gap adjustment unit, piston |
| 60: | Second gap adjustment unit | 61: | Position adjustment bar |
| 62: | Stopper | | |

## Claims

1. An electrode manufacturing apparatus comprising:
a pair of rolls arranged side by side with a gap between the pair of rolls;
a first bearing rotatably supporting the roll;
a second bearing facing the first bearing in an axial direction of the roll and rotatably supporting the roll; and
a gap adjustment unit configured to adjust at least one of a gap between the two first bearings supporting the pair of rolls, or a gap between the two second bearings supporting the pair of rolls.

2. The electrode manufacturing apparatus according to claim 1,
wherein the roll includes:
a cylindrical barrel extended in the axial direction; and
a neck extended from two end portions of the barrel and having a smaller diameter than a diameter of the barrel, and
wherein each of the first bearing and the second bearing includes:
a bearing body having an insertion hole into which the neck is inserted; and
a bearing housing on which the bearing body is mounted.

3. The electrode manufacturing apparatus according to claim 2,
wherein an inner diameter of the insertion hole of the bearing body is larger than an outer diameter of the neck.

4. The electrode manufacturing apparatus according to claim 1,
wherein the gap adjustment unit includes:
a first gap adjustment unit to adjust the gap between the two first bearings; and
a second gap adjustment unit to adjust the gap between the two second bearings.

5. The electrode manufacturing apparatus according to claim 4,
wherein the first gap adjustment unit applies a force in a direction of reducing the gap between the two first bearings, and
wherein the second gap adjustment unit applies the force in a direction of increasing the gap between the two second bearings.

6. The electrode manufacturing apparatus according to claim 4,
wherein the first gap adjustment unit includes:
a piston to apply pressure to at least one of the two first bearings to reduce the gap between the two first bearings.

7. The electrode manufacturing apparatus according to claim 6,
wherein one of the two first bearings is fixed, and the piston applies the pressure to the other first bearing toward said one first bearing.

8. The electrode manufacturing apparatus according to claim 4,
wherein the second gap adjustment unit includes:
a position adjustment bar that moves in between the two second bearings to increase the gap between the two second bearings.

9. The electrode manufacturing apparatus according to claim 8,
wherein at least one of facing sides of the two second bearings has a slope surface, and
wherein the position adjustment bar has a slope sliding surface disposed in contact with the slope surface.

10. The electrode manufacturing apparatus according to claim 9,
wherein the slope surface is formed in a direction in which a distance between the facing sides of the two second bearings decreases downwards.

11. The electrode manufacturing apparatus according to claim 8,
wherein the second gap adjustment unit further includes:
a stopper to keep the position adjustment bar from completely slipping out from between the two second bearings.

12. The electrode manufacturing apparatus according to claim 2,
wherein the pair of rolls have a same size, and
wherein the insertion hole of the bearing body of each of the first bearing and the second bearing has a same inner diameter.

13. A method for setting an electrode manufacturing apparatus, comprising the steps of:
placing a pair of rolls side by side;
reducing a gap between two first bearings rotatably supporting the pair of rolls to cause the pair of rolls to get closer to each other; and
increasing a gap between two second bearings facing the two first bearings in an axial direction of the rolls to constrain a motion of the pair of rolls.

14. The method for setting the electrode manufacturing apparatus according to claim 13,
wherein in the step of causing the pair of rolls to get closer to each other, the two first bearings move until they contact each other.

15. The method for setting the electrode manufacturing apparatus according to claim 14,
wherein the two first bearings are fixed in contact with each other, and
wherein the step of constraining the motion of the pair of rolls is performed in the fixed state of the two first bearings.

16. The method for setting the electrode manufacturing apparatus according to claim 13,
wherein in the step of constraining the motion of the pair of rolls, the two second bearings move to a location impossible to move any longer.
